Europäisches Patentamt

European Patent Office

Office européen des brevets

(11) Veröffentlichungsnummer: **0 084 096**

**A1**

(12) # EUROPÄISCHE PATENTANMELDUNG

(21) Anmeldenummer: **82110708.3**

(51) Int. Cl.³: **H 02 K 9/19**

(22) Anmeldetag: **19.11.82**

(30) Priorität: **03.12.81 DE 3147829**

(43) Veröffentlichungstag der Anmeldung:
**27.07.83 Patentblatt 83/30**

(84) Benannte Vertragsstaaten:
**DE GB IT**

(71) Anmelder: **ROBERT BOSCH GMBH**
**Postfach 50**
**D-7000 Stuttgart 1(DE)**

(72) Erfinder: **Kofink, Wolfgang, Dr. Dipl.-Ing.**
**Steinäcker 23**
**D-7307 Aichwald(DE)**

(54) **Elektrische Kollektormaschine, insbesondere als Antriebsmotor für Fahrzeuge.**

(57) Flüssigkeitsgekühlte, elektrische Kollektormaschine mit Trennung des den Kollektor aufnehmenden Innenraumes von dem restlichen, sämtliche Wicklungen der Maschine aufnehmenden Innenraum mittels einer auf dem Kollektor sitzenden Ringscheibe (18).

EP 0 084 096 A1

0084096

R. 17503
23.11.1981 Lr/Wl

ROBERT BOSCH GMBH, 7000 Stuttgart 1

Elektrische Kollektormaschine, insbesondere als
Antriebsmotor für Fahrzeuge

Die Erfindung betrifft eine elektrische Kollektormaschine,
insbesondere als Antriebsmotor für ein batteriegespeistes
Fahrzeug, mit Flüssigkeitskühlung für den Ständer und den
Anker der Maschine.

Der Erfindung liegt die Aufgabe zugrunde, bei einer mit
Flüssigkeitskühlung arbeitenden Kollektormaschine zu verhindern, daß durch das Kühlmittel die Kommutierungsvorgänge
ungünstig beeinflußt werden. Zur Lösung dieser Aufgabe
sind erfindungsgemäß die im kennzeichnenden Teil des Anspruchs 1 angegebenen Maßnahmen vorgesehen. Besonders
zweckmäßig ist es, wenn in weiterer Ausgestaltung der Erfindung als Schutzvorrichtung ein auf dem Kollektor sitzender, vorzugsweise mit diesem drehfest verbundener
Isolierstoffring vorgesehen ist, der an seiner äußeren
Randzone eine gegen den Ständer vorspringende Spritzscheibe
trägt, wobei zwischen der Randzone des Isolierstoffrings
und der benachbarten Innenwand des Maschinengehäuses eine
Labyrinthdichtung vorgesehen ist.

...

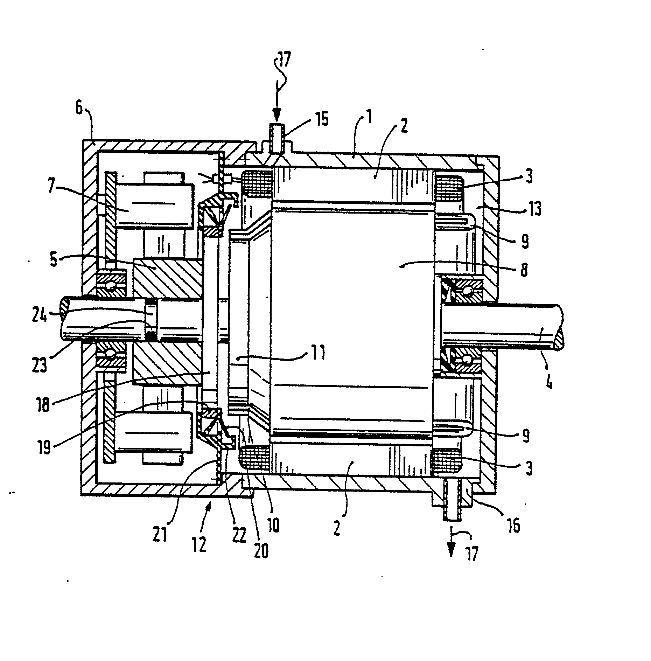

Die Erfindung ist nachstehend anhand eines in der Zeichnung
in seinem axialen Längsschnitt wiedergegebenen Ausführungsbeispieles, einer als Antrieb für ein Elektrofahrzeug vorgesehenen Kollektormaschine näher beschrieben und erläutert.

Die dargestellte Kollektormaschine enthält in ihrem zylindrischen, rohrförmigen Gehäuse 1 mindestens zwei Polschuhe
2, auf welchen jeweils eine Feldwicklung 3 angeordnet ist.
Zentrisch zum Gehäuse 1 verläuft eine Maschinenwelle 4,
die an einem Wellenende einen Kollektor 5 trägt und in
der Nähe dieses Kollektors mit einem nicht näher bezeichneten Rollenlager in einem Lagerschild 6 gelagert ist, welcher den Kollektor und den bei 7 angedeuteten Bürstenapparat
umschließt.

Auf der Welle 4 sitzt der im einzelnen nicht dargestellte
Anker 8, dessen Ankerwicklungen bei 9 angedeutet sind.
Die bei 10 angedeuteten Wicklungsenden der Ankerwicklung
9 sind im Bereich eines überstehenden Bundes 11 mit den
im einzelnen nicht dargestellten Kollektor lamellen verbunden. Zwischen diesem Bund 11 und den Auflagezonen der Bürsten ist eine durch das gemeinsame Bezugszeichen 12 angedeutete Dichtvorrichtung angeordnet, welche den vom kollektorseitigen Lagerschild umschlossenen, den Kollektor aufnehmenden Raum von dem übrigen, vom Gehäuse 1 umschlossenen
und sämtliche Wicklungen der Maschine aufnehmenden Raum
trennt. Dieser Raum ist in der Zeichnung mit 13 bezeichnet
und wird durch einen abtriebsseitigen Lagerschild 14 verschlossen. Der Aufnahmeraum 13 enthält sämtliche Wicklungen,
nämlich die Ständerwicklung 3 und die Ankerwicklung 9 und
hat einen Zufluß 15 und einen Abfluß 16 für als Kühlmittel
dienendes, durch die Pfeile 17 angedeutetes Kühlwasser, welches den Aufnahmeraum 13 drucklos durchfließt.

. . .

Zu der bei 12 angedeuteten Dichtvorrichtung gehört eine aus Isolierstoff hergestellte Ringscheibe 18, die dicht beim Bund 11 auf den Kollektor 5 aufgezogen ist und mit diesem umläuft. Die Isolierstoff-Ringscheibe 18 trägt an ihrer Umfangsfläche einen Schrumpfring 19, von welchem eine gegen den Ständer 2 gerichtete Spritzscheibe 20 absteht. Diese bildet zusammen mit einem an der dem Ständer 2 zugekehrten Stirnseite einer Halteplatte 21 sitzenden Dichtring 22 eine Labyrinthdichtung. Die Halteplatte 21 kann in der aus der Zeichnung erkennbaren Weise mit dem kollektroseitigen Lagerschild 6 verschraubt sein oder zwischen die Stirnfläche des Lagerschildes 6 und die Stirnfläche des Polgehäuses 2 eingeklemmt sein.

Beim dargestellten Ausführungsbeispiel ist ein O-Ring 23 aus Gummi oder gummielastischem Kunststoff in eine umlaufende, in die Ankerwelle 4 eingestochene Ringnut 24 eingelegt und dichtet den Kollektor 5 gegen die Welle 4 ab.

Durch den mit dem Kollektor 5 umlaufenden Isolierstoff-Dichtring 18 ergibt sich im Zusammenwirken mit der Labyrinthdichtung eine vorteilhafte Abdichtung des Kollektorraumes gegenüber dem übrigen Innenraum des Gehäuses 1.

R. 17 ...

23.11.1981 Lr/Wl

ROBERT BOSCH GMBH, 7000 Stuttgart 1

Ansprüche

1. Elektrische Kollektormaschine, insbesondere als Antriebsmotor für Fahrzeuge, mit Flüssigkeitskühlung für den Ständer und den Anker der Maschine, gekennzeichnet durch eine zwischen dem Kollektor (5) und der Ankerwicklung (9) im wesentlichen quer zur Ankerwelle (4) sich erstreckende Dichtvorrichtung (12), die den Kollektor an seinem Umfang umschließt und an ihrem Rande einen mit dem Maschinengehäuse verbundenen Dichtring (20, 21) gegenübersteht, derart, daß der Raum, in welchem der Kollektor untergebracht ist, von dem die Wicklungen (3, 9) umschließenden Teil des Maschinengehäuses (1) getrennt ist.

2. Maschine nach Anspruch 1, dadurch gekennzeichnet, daß der die Wicklungen (3, 9) umschließende Teil (13) des Gehäuses (1) mit wenigstens einem Zu- und einem Ablauf (15, 16) für die Kühlflüssigkeit (17) verschlossen ist.

3. Maschine nach Anspruch 1 oder 2, dadurch gekennzeichnet, daß die Dichtvorrichtung einen auf dem Kollektor sitzenden, vorzugsweise mit diesem drehfest verbundenen Isolierstoffring (18) aufweist.

4. Maschine nach Anspruch 3, dadurch gekennzeichnet, daß an der äußeren Randzone des Isolierstoffringes (18) ein gegen den Ständer vorspringende Spritzschiebe (20) befestigt, insbesondere mittels eines auf die Umfangsfläche des Isolierstoffringes aufgeschrumpften Tragringes (10) befestigt ist.

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-U-7 149 286 (SIEMENS)<br>* Gesamte Schrift *<br><br>--- | 1,2 | H 02 K 9/19 |
| A | DE-B-1 763 836 (ZUMBACH ELECTRONIC)<br>* Gesamte Schrift *<br><br>--- | 1-4 | |
| A | US-A-2 606 946 (A. FISCHER)<br><br>* Spalte 4, Zeile 63 - Spalte 5, Zeile 11 *<br><br>----- | | |

| RECHERCHIERTE SACHGEBIETE (Int. Cl. ³) |
|---|
| H 02 K 5/00<br>H 02 K 9/00 |

Der vorliegende Recherchenbericht wurde für alle Patentansprüche erstellt.

| Recherchenort | Abschlußdatum der Recherche | Prüfer |
|---|---|---|
| BERLIN | 09-03-1903 | GESSNER E A F |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82